# EUROPÄISCHE PATENTANMELDUNG

(11) **EP 1 063 168 A1**
(43) Veröffentlichungstag der Anmeldung: **27.12.2000**
(21) Anmeldenummer: 00109578.5
(22) Anmeldetag: 05.05.2000
(51) Int. Cl.: B65B 9/08, B65B 59/02

(54) **VERPACKUNGSVORRICHTUNG ZUM HERSTELLEN UND SIEGELN VON BEUTELN UNTERSCHIEDLICHER HÖHE**

(30) Priorität: 25.06.1999 DE 19929018
(71) Anmelder: Rovema Verpackungsmaschinen GmbH, 35463 Fernwald (DE)
(72) Erfinder: Kammler, Roman, Dr., 67547 Worms (DE); Baur, Walter, Dr., 63584 Gründau (DE)

(57) **Zusammenfassung**

Bei einer Vorrichtung zum Verpacken, mit einer horizontal in Transportrichtung (3) weiterbewegten, entlang einer Knicklinie (1) umgefalteten Folienbahn (2) dienen eine Quersiegeleinrichtung (7) und eine Längssiegeleinrichtung (11) dem Verschweißen von Beuteln (13), welche mittels einer Trenneinrichtung (12) von der Folienbahn (2) abgetrennt werden.

Es wird vorgeschlagen, eine Höhenverstelleinrichtung (14) zum Verstellen der Höhe der Längssiegeleinrichtung (11) vorzusehen, um einen Umbau der Längssiegeleinrichtung (11) für den Fall zu vermeiden, daß die Folienbahn (2) gegen eine Folienbahn (2) mit anderer Breite ausgetauscht wird, um Beutel (13) mit einer anderen Höhe herzustellen.

## Beschreibung

Die Erfindung betrifft eine Vorrichtung zum Verpacken, mit einer horizontal weiterbewegbaren, entlang einer Knicklinie umgefalteten Folienbahn, einer Umformeinrichtung zum Umformen der Folienbahn, einer Quersiegeleinrichtung zum Verschweißen der umgefalteten Folienbahn quer zu deren Transportrichtung und zur Erzeugung von Quernähten, einer Trenneinrichtung zum Durchtrennen der Folienbahn zwischen der Quernaht eines Beutels und der sich daran anschließenden Quernaht eines nachfolgenden Beutels, und mit einer Längssiegeleinrichtung zum kopfseitigen und/oder bodenseitigen Verschweißen der umgefalteten Folienbahn parallel zur Transportrichtung.

Bei derartigen, horizontalen Verpackungsmaschinen muß kein bodenseitiges Verschweißen der umgefalteten Folienbahn erfolgen, da ein Beutel bodenseitig infolge der dort durchgängigen Folie verschlossen ist. Das bodenseitige Verschweißen erfolgt wahlweise und führt zusammen mit dem kopfseitigen Verschweißen und der randseitigen Anbringung der Quernähte zu sogenannten Vierseitensiegelrandbeuteln. Das kopfseitige Verschweißen dient einem Verschließen eines Beutels mittels einer Kopfnaht nach dessen Befüllung. Mit der eingangs beschriebenen Vorrichtung können aber auch unbefüllte, kopfseitig offene Leerbeutel hergestellt werden. In diesem Fall wird entweder nur eine Längssiegeleinrichtung für ein bodenseitiges Verschweißen der Folienbahn benötigt, oder die Längssiegeleinrichtung wird nicht genutzt.

Beim Einsatz der Längssiegeleinrichtung ist nach einer geänderten Folienbreite ein Ummontieren an der Vorrichtung notwendig. Wenn Beutel mit einer bestimmten Höhe gefertigt werden sollen, muß eine Folienbahn genutzt werden, deren Breite dem doppelten Betrag der gewünschten Beutelhöhe entspricht. Wird eine andere Folienbreite eingesetzt, so wird z. B. die Höhe der Kopfnaht beibehalten, währenddessen für ein Führen der Knicklinie der Folienbahn die Umformeinrichtung bezüglich ihrer Höhe verstellt wird. Für Vierseitensiegelrandbeutel ist hierzu ein Ummontieren der Längssiegeleinrichtung notwendig, da der Abstand zwischen der Kopfnaht und der Bodennaht in Abhängigkeit zur neuen Beutelhöhe eingestellt werden muß. Bleibt die Umformeinrichtung unverändert, so muß nach einer Änderung der Folienbreite zur Erzeugung befüllter und kopfseitig verschlossener Beutel in jedem Fall ein Ummontieren der Längssiegeleinrichtung erfolgen.

Der Erfindung liegt die Aufgabe zu Grunde, bei einer Vorrichtung der eingangs beschriebenen Art ein Ummontieren der Längssiegeleinrichtung nach einem Austausch einer Folienbahn gegen eine Folienbahn anderer Breite zu vermeiden. Mit der Vorrichtung sollen zudem kopfseitig verschlossene Beutel herstellbar sein.

Gelöst ist die Aufgabe gemäß dem kennzeichnenden Teil der Anspruchs 1. Danach ist eine Höhenverstelleinrichtung zum Verstellen der Höhe der Längssiegeleinrichtung vorgesehen.

Mit der Höhenverstelleinrichtung kann die Längssiegeleinrichtung bei geänderter Folienbreite in einfacher Weise und ohne Montagearbeit auf eine neue Beutelhöhe eingestellt werden. Die Umformeinrichtung kann in ihrer Position verbleiben. Die Umrüstzeit für eine neue Beutelhöhe ist sehr kurz. Die Längssiegeleinrichtung kann in einfacher Weise, z. B. manuell mittels eines Handrades und einer Spindel, oder automatisch mittels eines Motors und einer Höhenverstellmechanik auf die gewünschte Höhe gesetzt werden.

Weitere, vorteilhafte Ausgestaltungen der Erfindung sind in den Ansprüchen 2 bis 10 beschrieben.

Weist die Längssiegeleinrichtung eine Siegelbacke zum Erzeugen einer Bodennaht (Anspruch 2) oder einer Kopfnaht (Anspruch 3) auf, an der die Höhenverstelleinrichtung vorgesehen ist, so kann eine Bodennahterzeugung oder eine Kopfnahterzeugung auf einer vorgegebenen Höhe ausgeführt werden. Wird die obere Kante einer umgefalteten Folienbahn nach einer Änderung der Folienbreite auf der gleichen Höhe behalten wie bei der zuvor vorhandenen Folienbreite, so liegt die Knicklinie der Folienbahn auf einer anderen Höhe und die Siegelbacke zum Erzeugen der Bodennaht wird in ihrer Höhe verstellt. Behält man die Höhe der Knicklinie bei, so wird die Höhe der Siegelbacke zum Erzeugen der Kopfnaht verstellt.

Die Verpackungsleistung der Vorrichtung ist relativ hoch, wenn die Folienbahn kontinuierlich, d. h. ohne Stillstandszeiten, weiterbewegt wird (Anspruch 4). Die erfindungsgemäße Vorrichtung ist aber in gleicher Weise für kontinuierlich und getaktet betriebene, horizontale Verpackungsmaschinen geeignet.

Ist eine umlaufende Siegelbacke vorgesehen, die entlang einer Siegelstrecke an der Folienbahn anliegt und mit der Folienbahn mitbewegt wird, sowie an den Anfang der Siegelstrecke zurücksetzbar ist (Anspruch 5), so kann während des Weitertransports der Folienbahn deren Verschweißung erfolgen. Ein Folienstillstand zum Zwecke des Verschweißens ist nicht notwendig, und die Verpackungsgeschwindigkeit kann relativ hoch sein. Ist die Siegelbacke an einem umlaufenden Backenträger vorgesehen und über ein federndes Element gegenüber diesem abgefedert (Anspruch 6), so kann sie eine D-förmige Backenbahn beschreiben. Entlang des geraden Abschnitts dieser Bahn erfolgt die Verschweißung der bewegten Folienbahn. Die Siegelbacke wird sodann entlang des Bogens der Backenbahn an den nachfolgenden Beutel zurückgesetzt. Die Folienbahn wird schnell und sicher verschweißt, wenn zwei gegenläufig umlaufende, die Folienbahn entlang der Siegelstrecke zwischen sich einklemmende Siegelbacken vorgesehen sind (Anspruch 7).

Weist die Höhenverstelleinrichtung eine mittels eines Motors betriebene Lineareinheit auf (Anspruch 8), so kann die Längssiegeleinrichtung in einfacher Weise motorisch verstellt werden. Eine Lineareinheit ist zudem kompakt und auch bei enger Bauweise einsetzbar. Eine andere, sehr sicher betreibbare Höhenverstelleinrichtung ist erreicht, wenn diese eine mittels eines Motors betriebene Spindel aufweist, welche gegen einen Spindelkörper wirkt, und die Längssiegeleinrichtung über einen Träger mit der Spindel oder dem Spindelkörper verbunden ist (Anspruch 9). Die Umdrehungen der Spindel können hierbei direkt zur Höheneinstellung genutzt werden. Als Motor, sowohl für eine Lineareinheit als auch für eine Spindel, eignet sich ein Servomotor (Anspruch 10). Mittels eines Servomotors kann ein Signal der Maschinensteuerung direkt und genau für eine Höheneinstellung genutzt werden.

Im folgenden wird die Erfindung an Hand zwei Ausführungsbeispiele darstellender Figuren näher beschrieben. Es zeigt:
- Figur 1: in einer Seitenansicht eine Vorrichtung zum Verpacken, mit einer horizontal weiterbewegten, entlang einer unteren Knicklinie umgefalteten Folienbahn, einer Umformeinrichtung innerhalb der umgefalteten Folienbahn, einer Quersiegeleinrichtung, einer Befüllstation, einer Längssiegeleinrichtung zum kopfseitigen und bodenseitigen Verschweißen der Folienbahn, wobei an jeweils zwei gegeneinander bewegbaren Siegelbacken zum Erzeugen der Bodennaht und der Kopfnaht eine Höhenverstelleinrichtung vorgesehen ist, und mit einer Trenneinrichtung zum Durchtrennen der Folienbahn;
- Figur 2: in einem Schnitt entlang A-A der Figur 1 einen befüllten Beutel;
- Figur 3: in einer Seitenansicht und in einer Prinzipdarstellung eine Höhenverstellung für eine umlaufende Siegelbacke, die mittels eines Motors über eine Spindel und einen Spindelkörper bezüglich ihrer Höhe verstellbar ist;
- Figur 4: in einer Ansicht von oben die umlaufende Siegelbacke der Figur 3 an einem weiterbewegten Folienschlauch, sowie
- Figur 5: in einer Ansicht von oben zwei gegeneinander drückende und eine Folienbahn zwischen sich einklemmende Siegelbacken einer Längssiegeleinrichtung, wobei die Siegelbacken entsprechend Figur 4 umlaufen und dabei jeweils eine D-förmige Bahn beschreiben.

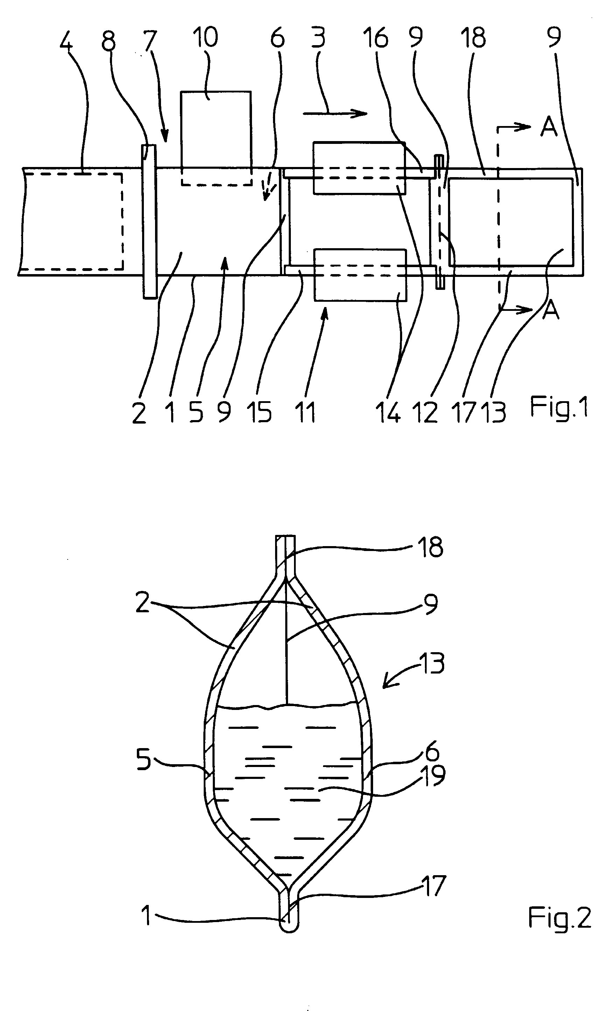

Bei einer Vorrichtung zum Verpacken wird eine entlang einer Knicklinie 1 umgefaltete Folienbahn 2 in horizontaler Transportrichtung 3 weiterbewegt (Figur 1, Figur 2). Eine Umformeinrichtung 4 dient dem Umformen der ebenen (von einer nicht dargestellten Vorratsrolle abgewickelten) Folienbahn 2. Die an der Knicklinie 1 miteinander verbundenen Seiten 5, 6 der Folienbahn 2 liegen deckungsgleich aufeinander. Eine Quersiegeleinrichtung 7 weist zwei gegeneinander bewegliche, die Folienbahn 2 zwischen sich einklemmende Siegelbacken 8 auf, womit die Folienbahn 2 äquidistant quer zu deren Transportrichtung 3 unter Erzeugung von Quernähten 9 verschweißt wird. An einer Füllstation 10 erfolgt jeweils eine Befüllung zwischen zwei Quernähten 9. Eine Längssiegeleinrichtung 11 dient einem kopfseitigen und einem bodenseitigen Verschweißen der umgefalteten Folienbahn 2 parallel zur Transportrichtung 3. Mittels einer Trenneinrichtung 12 wird die Folienbahn 2 innerhalb einer Quernaht 9 durchtrennt, wodurch ein Beutel 13 von der Folienbahn 2 abgetrennt wird. Die Durchtrennung erfolgt derart, daß jeweils eine ursprüngliche Quernaht 9 teilweise als Quernaht 9 eines Beutels 13 und als Quernaht 9 des sich daran anschließenden Beutels 13 fungiert. An der Längssiegeleinrichtung 11 ist eine Höhenverstelleinrichtung 14 vorgesehen. Zwei untere, gegeneinander bewegbare Siegelbacken 15 erzeugen eine Bodennaht 17. Zwei obere, gegeneinander bewegbare Siegelbacken 15 erzeugen eine Kopfnaht 18. Die oberen Siegelbacken 16 können ebenso wie die unteren Siegelbacken 15 durch die Höhenverstelleinrichtung 14 hinsichtlich ihrer Höhe verstellt werden, wenn eine Folienbahn 2 mit einer anderen Breite eingesetzt werden soll, um Beutel 13 mit einer anderen Höhe herzustellen. Die Beutel sind Vierseitensiegelrandbeutel, welche mit einem Produkt 19 befüllt sind.

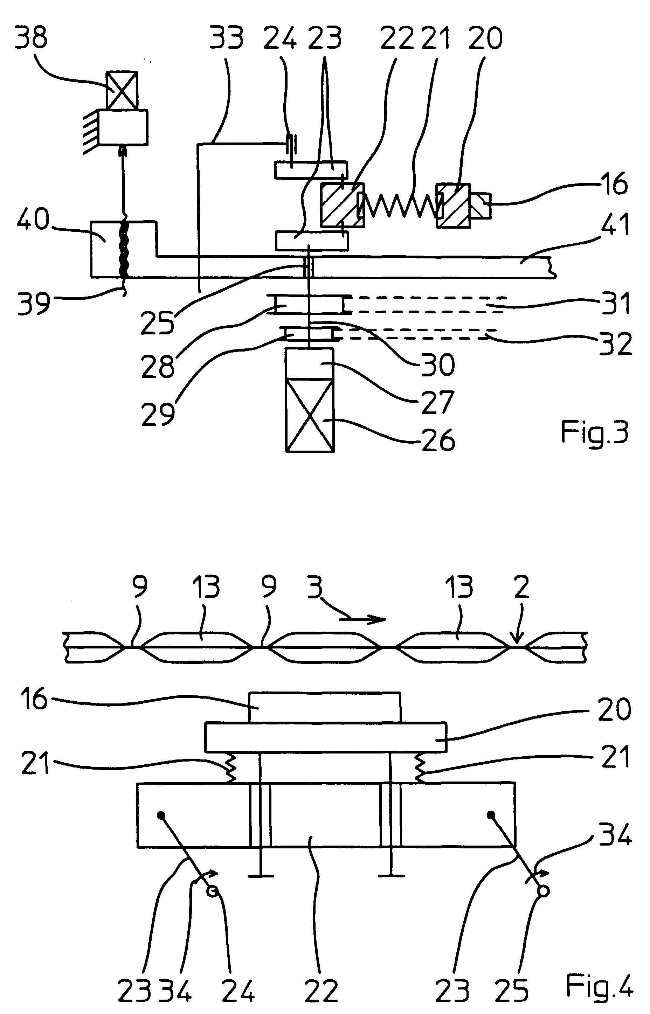

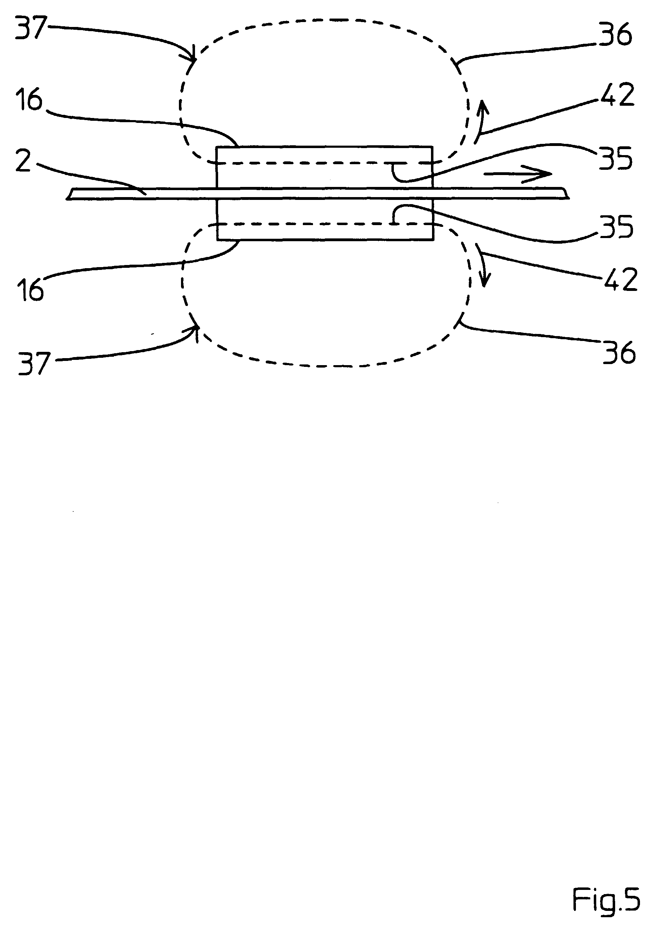

Beim Ausführungsbeispiel der Figuren 3, 4 und 5 ist eine Siegelbacke 16 für eine Kopfnahterzeugung an einem Backenträger 20 befestigt, der über Federn 21 gegenüber einem Träger 22 abgefedert ist. Der Träger 22 ist an einer Kurbel 23 vorgesehen. Die Kurbel 23 erlaubt auf Grund der Gelenke 24, 25 eine umlaufende Bewegung der Siegelbacke 16 in Drehrichtung 34. Die Kurbel 23 wird mittels eines Servomotors 26 und eines Getriebes 27 permanent gedreht. Zwei Zahnriemenräder 28, 29 übertragen die Bewegung der Welle 30 über Zahnriemen 31, 32 auf eine entgegengesetzt umlaufende Siegelbacke 16 (Figur 5). Eine Stütze 33 hält die Kurbel 23.

Die Folienbahn 2 wird in ihre Transportrichtung 3 kontinuierlich weiterbewegt (Figur 4). Die Siegelbacken 16 liegen entlang einer Siegelstrecke 35 an der Folienbahn 2 an und werden während des Schweißvorganges entlang dieses geraden Abschnitts mit der Folienbahn 2 mitbewegt (Figur 5). Dabei sind die Federn 21 gestaucht. Anschließend werden die Siegelbacken 16 in den Richtungen 42 entlang einer bogenförmigen Bahn 36 an den Anfang der Siegelstrecke 35 zurückgesetzt. Eine Siegelstrecke 35 und eine Bahn 36 bilden zusammen eine D-förmige Bahn 37.

Die Höhenverstelleinrichtung 14 (Figur 3) weist eine mittels eines Motors 38 (Servomotor) betriebene Spindel 39 auf, welche gegen einen Spindelkörper 40 wirkt. Die Längssiegeleinrichtung 11 ist über einen Träger 41 mit dem Spindelkörper 40 verbunden. Durch Drehen des Motors 38 kann die Höhe des Trägers 41 und damit die Höhe der umlaufenden, für die Verschweißung einer Kopfnaht 18 (Figur 4) vorgesehenen, gegenläufig betriebenen Siegelbacken 16 (Figur 5) verstellt werden.
- 1: Knicklinie
- 2: Folienbahn
- 3: Transportrichtung
- 4: Umformeinrichtung
- 5, 6: Seite der Folienbahn
- 7: Quersiegeleinrichtung
- 8: Siegelbacke
- 9: Quernaht
- 10: Füllstation
- 11: Längssiegeleinrichtung
- 12: Trenneinrichtung
- 13: Beutel
- 14: Höhenverstelleinrichtung
- 15: Siegelbacke, untere
- 16: Siegelbacke, obere
- 17: Bodennaht
- 18: Kopfnaht
- 19: Produkt
- 20: Backenträger
- 21: Feder
- 22: Träger
- 23: Kurbel
- 24, 25: Gelenk
- 26: Servomotor
- 27: Getriebe
- 28, 29: Zahnriemenrad
- 30: Welle
- 31, 32: Zahnriemen
- 33: Stütze
- 34: Drehrichtung
- 35: Siegelstrecke
- 36: bogenförmige Bahn
- 37: D-förmige Bahn
- 38: Motor
- 39: Spindel
- 40: Spindelkörper
- 41: Träger
- 42: Richtung

## Patentansprüche

1. Vorrichtung zum Verpacken, mit einer horizontal weiterbewegbaren, entlang einer Knicklinie umgefalteten Folienbahn, einer Umformeinrichtung zum Umformen der Folienbahn, einer Quersiegeleinrichtung zum Verschweißen der umgefalteten Folienbahn quer zu deren Transportrichtung und zur Erzeugung von Quernähten einer Trenneinrichtung zum Durchtrennen der Folienbahn zwischen der Quernaht eines Beutels und der sich daran anschließenden Quernaht eines nachfolgenden Beutels, und mit einer Längssiegeleinrichtung zum kopfseitigen und/oder bodenseitigen Verschweißen der umgefalteten Folienbahn parallel zur Transportrichtung, dadurch gekennzeichnet, daß eine Höhenverstelleinrichtung (14) zum Verstellen der Höhe der Längssiegeleinrichtung (11) vorgesehen ist.

2. Vorrichtung nach Anspruch 1, dadurch gekennzeichnet, daß die Längssiegeleinrichtung (11) eine Siegelbacke (15) oder zwei gegeneinander bewegbare Siegelbacken (15) zum Erzeugen einer Bodennaht (17) aufweist, an der die Höhenverstelleinrichtung (14) vorgesehen ist.

3. Vorrichtung nach Anspruch 1 oder Anspruch 2, dadurch gekennzeichnet, daß die Längssiegeleinrichtung (11) eine Siegelbacke (16) oder zwei gegeneinander bewegbare Siegelbacken (16) zum Erzeugen einer Kopfnaht (18) aufweist, an der die eine Höhenverstelleinrichtung (14) vorgesehen ist.

4. Vorrichtung nach Anspruch 1, Anspruch 2 oder Anspruch 3, dadurch gekennzeichnet, daß die Folienbahn (2) kontinuierlich weiterbewegt wird.

5. Vorrichtung nach Anspruch 2, Anspruch 3 oder Anspruch 4, dadurch gekennzeichnet, daß eine umlaufende Siegelbacke (16) vorgesehen ist, die entlang einer Siegelstrecke (35) an der Folienbahn (2) anliegt und mit der Folienbahn (2) mitbewegbar ist, sowie an den Anfang der Siegelstrecke (35) zurücksetzbar ist.

6. Vorrichtung nach Anspruch 5, dadurch gekennzeichnet, daß die Siegelbacke (16) an einem umlaufenden Backenträger (20) vorgesehen ist, und daß die Siegelbacke (16) über ein federndes Element, insbesondere eine Feder (21), gegenüber dem Backenträger (20) abgefedert ist.

7. Vorrichtung nach Anspruch 5 oder Anspruch 6, dadurch gekennzeichnet, daß zwei gegenläufig umlaufende, die Folienbahn (2) entlang der Siegelstrecke (35) zwischen sich einklemmende Siegelbacken (16) vorgesehen sind.

8. Vorrichtung nach mindestens einem der Ansprüche 1 bis 7, dadurch gekennzeichnet, daß die Höhenverstelleinrichtung eine mittels eines Motors betriebene Lineareinheit aufweist.

9. Vorrichtung nach mindestens einem der Ansprüche 1 bis 7, dadurch gekennzeichnet, daß die Höhenverstelleinrichtung (14) eine mittels eines Motors (38) betriebene Spindel (39) aufweist, welche gegen einen Spindelkörper (40) wirkt, und daß die Längssiegeleinrichtung (11) über einen Träger (41) mit der Spindel (39) oder dem Spindelkörper (40) verbunden ist.

10. Vorrichtung nach Anspruch 8 oder Anspruch 9, dadurch gekennzeichnet, daß als Motor (38) ein Servomotor vorgesehen ist.
